# EUROPÄISCHE PATENTSCHRIFT

(11) **EP 2 064 484 B1**
(45) Veröffentlichungstag und Bekanntmachung des Hinweises auf die Patenterteilung: **12.06.2013**
(21) Anmeldenummer: 07803204.2
(22) Anmeldetag: 04.09.2007
(51) Int. Cl.: F16P 3/14, G01S 13/56, B23Q 5/58

(54) **WERKZEUGMASCHINENÜBERWACHUNGSVORRICHTUNG**
MACHINE TOOL MONITORING DEVICE
DISPOSITIF DE SURVEILLANCE DE MACHINE-OUTIL

(30) Priorität: 04.09.2006 DE 102006041754; 30.08.2007 DE 102007041098
(43) Veröffentlichungstag der Anmeldung: 03.06.2009
(73) Patentinhaber: Robert Bosch GmbH, 70442 Stuttgart (DE)
(72) Erfinder: MAHLER, Michael, 70771 Leinfelden-Echterdingen (DE); KRAPF, Reiner, 72770 Reutlingen (DE); BRAUN, Heiko, 70771 Leinfelden-Echterdingen (DE); HEES, Alexander, Werner, 74321 Bietigheim-Bissingen (DE)
(86) Internationale Anmeldenummer: PCT/EP2007/059239
(87) Internationale Veröffentlichungsnummer: WO 2008/028905

(56) Entgegenhaltungen:
- EP-A- 1 422 022
- WO-A-94/24579
- US-A1- 2006 096 425
- US-A1- 2006 101 960
- ETSI ET AL: "Object discrimination and characterization applications operating in the frequency band 2,2 GHz to 8 GHz" ETSI STANDARDS, EUROPEAN TELECOMMUNICATIONS STANDARDS INSTITUTE, SOPHIA-ANTIPO, FR, Bd. DTRERM-RM, NR 44-2, Nr. v111, Mai 2006 (2006-05), XP002459104 ISSN: 0000-0001

## Beschreibung

### Stand der Technik

Die Erfindung geht aus von einer Werkzeugmaschinenüberwachungsvorrichtung nach dem Oberbegriff des Anspruchs 1.

Es ist bereits eine Werkzeugmaschinenüberwachungsvorrichtung mit einer Erkennungseinheit zur Erkennung einer Anwendungssituation bei einer Werkzeugmaschine bekannt.

Die gattungsbildende US 2006/096425 A1 offenbart eine Werkzeugmaschinenüberwachungsvorrichtung mit einer optischen Erkennungseinheit in Form einer Videokamera zur Erkennung einer Anwendungssituation bei einer Werkzeugmaschine. Darüber hinaus besitzt das System der US 2006/096425 A1 auch eine Markierungseinheit in Form eines Lasers, der einen sichtbaren Laserstrahl in Richtung des Werkzeuges der Werkzeugmaschine aussendet, so dass ein Nutzer in den Laserstrahl gerät, falls er sich dem Werkzeug, beispielsweise dem Sägeblatt der Tischkreissäge zu nah annähert.

Auch die US 2006/0101960 A1 zeigt ein zur US 2006/096425 A1 vergleichbares, optisches System. Die US 2006/0101960 A1 offenbart insbesondere eine Werkzeugmaschinenüberwachungsvorrichtung mit einem Annäherungssensor und einem Laser zur Markierung des Messbereichs des Annäherungssensors.

Die EP 1 422 022 A1 offenbart eine Werkzeugmaschinenüberwachungsvorrichtung auf Radarbasis, bei der zwei schmalbandige Radarsensoren unterschiedliche Bereiche der Werkzeugmaschine, die insbesondere als eine stationäre Tischkreissäge ausgebildet ist, "beobachten" und ein in diesem Bereich "eindringendes" Objekt detektieren. Abhängig von der Geschwindigkeit und der Position des eindringenden Objektes wird ein Aktuator der Überwachungsvorrichtung betätigt, der das Werkzeug, d. h. das Sägeblatt der Tischkreissäge instantan abbremst, um eine Nutzergefährdung zu minimieren.

Die Unterlage der ETSI "Object discrimination and characterization applications operating in the frequency band 2,2 GHz to 8 GHz; ETSI Standards, European Telecommunications Standards Institute. Sophia Antipolis, FR; Bd DTRERM-RM, Nr 44-2; Nr. V111, Mai 2006 XP002459104 informiert über die Verwendung von Ultrabreitbandsensoren zur Detektion von Objekten und deren rechtlicher Beschränkung. Vorgestellt wird auch die Verwendung eines UWB-Sensors als Annäherungssensor für eine Werkzeugmaschinenüberwachungsvorrichtung.

### Vorteile der Erfindung

Die Erfindung geht aus von einer Werkzeugmaschinenüberwachungsvorrichtung mit einer Erkennungseinheit zur Erkennung einer Anwendungssituation bei einer Werkzeugmaschine.

Die Erfindung wird durch die Merkmale des Anspruchs 1 definiert.

Es wird unter anderen vorgeschlagen, dass die Werkzeugmaschinenüberwachungsvorrichtung mindestens eine optische Projektionseinheit zur Definition mindestens zweier Überwachungsbereiche aufweist. In diesem Zusammenhang soll unter einer "Projektionseinheit" insbesondere eine Einheit verstanden werden, die Bereiche bzw. Zonen, insbesondere Überwachungsbereiche, auf ein Objekt, vorzugsweise auf ein Werkstück, projiziert und damit vorzugsweise für einen Bediener der Vorrichtung optisch erkennbarsichtbar macht, wobei die Bereiche bzw. Zonen vorteilhafterweise um ein Werkzeug angeordnet sind und somit zu,einer Sicherheit für einen Bediener im Betrieb der Werkzeugmaschine beitragen. Ferner soll unter einem "Überwachungsbereich" insbesondere ein Bereich verstanden werden, der um ein Werkzeug angeordnet ist und einem Bediener eine Gefahr aufgrund einer Nähe zu dem Werkzeug signalisiert und/oder in dem bei einem Vorhandensein eines menschlichen Gewebes ein Betrieb bzw. ein Antrieb des Werkzeugs reduziert bzw. unterbrochen wird. Unter einer "Anwendungssituation" soll hierbei insbesondere eine Situation eines Betriebs bzw. eines Antriebs der Werkzeugmaschine bzw. eines Werkzeugs der Werkzeugmaschine verstanden werden. Hierdurch kann ein besonders vorteilhafter Schutz eines Bedieners vor Verletzungen, wie beispielsweise ein Absägen eines Fingers bzw. einer Hand, zumindest reduziert bzw. verhindert werden. Eifindungsgemäβ wird der Bediener durch eine optische Markierung der Überwachungsbereiche auf eine drohende Gefahr aufmerksam gemacht.

Durch die Definition von zumindest zwei Überwachungsbereichenzum Überwachen eines Anwendungsprozesses der Werkzeugmaschine kann eine vorteilhafte Abstufung der Überwachungsbereiche in verschiedene Sicherheitsbereiche erzielt werden. Dabei soll unter einem "Anwendungsprozess der Werkzeugmaschine" insbesondere ein Betriebsprozess, wie insbesondere ein Sägen, ein Schneiden usw. der Werkzeugmaschine verstanden werden.

Erfindungsgemäβ wird vorgeschlagen, dass die Projektionseinheit eine optische Projektionseinheit aufweist, wodurch eine vorteilhafte Markierung, insbesondere eine optische Markierung, der Überwachungsbereiche und damit eine vorteilhafte Übermittelung der Überwachungsbereiche an einen Bediener erzielt werden kann.

Erfindungsgemäβ wird vorgeschlagen, dass die Werkzeugmaschinenüberwachungsvorrichtung eine Erkennungseinheit zur Detektion von menschlichem und/oder tierischem Gewebe und/oder eines Werkstücks aufweist, wodurch eine zusätzliche Sicherheitsfunktion für einen Bediener und/oder weiterer Objekte menschlicher und/oder tierischer Natur erreicht werden kann, wie beispielsweise wenn die Detektion im Bereich des Werkzeugs erfolgt, und dadurch an den Bediener eine Warnung ausgegeben werden kann. Es kann damit zudem eine vorteilhafte Unterscheidung zwischen dem Werkstück und einer Hand des Bedieners ermöglicht werden.

Erfindungsgemäβ wird vorgeschlagen, dass die Erkennungseinheit zumindest zwei Überwachungsbereiche zum Überwachen eines Anwendungsprozesses der Werkzeugmaschine festlegt, wodurch vorteilhafte unterschiedliche Sicherheitsstufen der Werkzeugmaschinenüberwachungsvorrichtung erzielt werden können. Vorteilhafterweise überlappen die Überwachungsbereiche der Projektionseinheit und die Überwachungsbereiche der Erkennungseinheit zumindest teilweise.

Eine besonders gute Sichtbarkeit der Überwachungsbereiche der Erkennungseinheit für einen Bediener der Werkzeugmaschine kann erreicht werden, wenn, wie erfindungsgemäβ vorgeschlagen, die Überwachungsbereiche der Projektionseinheit die Überwachungsbereiche der Erkennungseinheit optisch markieren.

Erfindungsgemäβ kann ein besonders hoher Sicherheitsstandard für einen Bediener erreicht werden und/oder es kann eine drohende Gefahr für einen Bediener sichtbar gemacht werden, wenn mindestens ein Überwachungsbereich der Projektionseinheit ein optisches und/oder visuelles Erscheinungsbild aufweist, das sich ändert, wenn menschliches oder tierisches Gewebe und/oder ein Werkstück in den Überwachungsbereich gelangt. Zudem kann dies einen Bediener dazu veranlassen, eine unvorsichtige Arbeitsweise, wie beispielsweise ein häufiger Aufenthalt der Hand in einem der Überwachungsbereiche, abzulegen.

Des Weiteren wird vorteilhaft vorgeschlagen, dass den Überwachungsbereichen bei einem Erkennen eines menschlichen und/oder tierischen Gewebes jeweils ein unterschiedlicher Betriebsmodus der Werkzeugmaschine zugeordnet ist. Hierdurch kann ein Betriebsmodus der Werkzeugmaschine einer unmittelbar bevorstehenden Gefahrensituation angepasst werden und damit ein Gefahrenpotential für einen Bediener im Betrieb der Handwerkzeugmaschine vorteilhaft reduziert werden.

Ist zumindest einem der Überwachungsbereiche ein Warnmodus der Werkzeugmaschine zugeordnet, kann eine vorteilhafte Sicherheit für einen Bediener erzielt werden, indem der Bediener darauf aufmerksam gemacht wird, dass sich ein Körperteil von ihm in einer Gefahrensituation, die durch eine Nähe zum Werkzeug gekennzeichnet ist, befindet.

Besonders vorteilhaft kann eine Sicherheit für den Bediener verbessert werden, wenn die Erkennungseinheit im Zusammenwirken mit einer Werkzeugmaschinenantriebseinheit, die zum Antreiben eines Werkzeugs vorgesehen ist, zum Verlangsamen eines Werkzeugantriebs im Warnmodus vorgesehen ist und/oder zumindest einem der Überwachungsbereiche eine Sicherheitsabschaltung der Werkzeugmaschine zugeordnet ist. In diesem Zusammenhang soll unter einer "Sicherheitsabschaltung" eine insbesondere zumindest teilautomatische und besonders vorteilhaft eine vollautomatische Abschaltung bzw. eine Beendigung eines Antriebs bzw. Betriebs des Werkzeugs verstanden werden, sobald ein menschliches oder tierisches Gewebe sich in dem der Sicherheitsabschaltung zugeordneten Überwachungsbereich befindet. Vorzugsweise ist die Erkennungseinheit hierzu zu einer Positions- und/oder Geschwindigkeitsbestimmung, insbesondere eine Positions- und/oder Geschwindigkeitsbestimmung von menschlichem oder tierischem Gewebe und/oder eines Werkstücks, wie beispielsweise durch eine Bestimmung einer dielektrischen Konstante, vorgesehen. Hiermit kann insbesondere vorteilhaft ein Betrieb der Säge bei fehlendem Werkstück unterbunden werden.

Erfindungsgemäβ ist vorgeschlagen, dass die Werkzeugmaschinenüberwachungsvorrichtung insbesondere die Erkennungseinheit zumindest einen UWB-Radarsensor (Ultrabreitband-Radarsensor) aufweist. Es kann mit einer Nutzung von ultrabreitbandigen Signalen eine hohe Informationsdichte und dadurch eine effektive Überwachung erreicht werden. Unter einem "UWB-Radarsensor bzw. einem Ultrabreitband-Radarsensor" soll in diesem Zusammenhang insbesondere ein Radarsensor verstanden werden, mittels dessen ein ultrabreitbandiges Radarsignal erzeugt, gesendet, empfangen und/oder ausgewertet werden kann. Unter einem "ultrabreitbandigen (oder Ultra Wide Band oder UWB) Radarsignal" soll insbesondere ein elektromagnetisches Signal verstanden werden, welches einen Nutzfrequenzbereich mit einer Mittelfrequenz im Frequenzbereich von 1 GHz bis 15 GHz und einer Frequenzbandbreite von zumindest 500 MHz aufweist.

Eine besonders effektive Erkennung kann erreicht werden, wenn die Werkzeugmaschinenüberwachungsvorrichtung, insbesondere die Erkennungseinheit, ein Antennenarray aufweist. Unter einem "Antennenarray" soll in diesem Zusammenhang insbesondere eine Gruppe von mehreren voneinander unterschiedlichen Antennen verstanden werden, die im Betrieb mittels einer gemeinsamen Signalerzeugungseinheit mit einem zu sendenden Signal gespeist werden. Zweckmäßigerweise weist das Antennenarray zumindest eine Ultrabreitband-Radar-Antenne auf.

Es kann die Genauigkeit bei einer Erkennung erhöht werden, wenn das Antennenarray als phasenvariables Antennenarray ausgebildet ist. Unter einem "phasenvariablen" Antennenarray soll in diesem Zusammenhang insbesondere ein Antennenarray verstanden werden, welchem zumindest ein Phasenverschiebungsmittel zugeordnet ist, welches zur Änderung zumindest einer relativen Phasenlage zwischen zwei Signalen, die von unterschiedlichen Antennen des Antennenarrays abgestrahlt werden, vorgesehen ist.

Vorteilhafterweise umfasst die Erkennungseinheit eine Recheneinheit, die dazu vorgesehen ist, die Anwendungssituation durch eine auf einer unscharfen und/oder neuronalen Logik basierende Auswertung von Kenngrößen zu erkennen. Mit Hilfe einer unscharfen Logik kann von der Recheneinheit anhand des erfassten Signals eine große und komplexe Informationsmenge schnell ausgewertet werden. Eine unscharfe Logik stellt insbesondere eine Logik dar, die dem Auftreten eines bestimmten Ereignisses einen Wahrscheinlichkeitswert im Intervall zwischen 0 (falsch) und 1 (wahr) zuordnet. Durch eine neuronale Logik können vorteilhafte Selbstlernfunktionen der Werkzeugmaschinenüberwachungsvorrichtung erreicht werden.

In einer vorteilhaften Weiterbildung der Erfindung wird vorgeschlagen, dass die Erkennungseinheit eine Datenbank aufweist, in welcher einem Satz von Kenngrößen eine Anwendungssituation zugeordnet ist. Es kann ein besonders schneller Erkennuhgsprozess einer Anwendungssituation vorteilhaft erreicht werden, indem eine Korrelation zwischen den erfassten Kenngrößen und einer Anwendungssituation untersucht wird.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Werkzeugmaschine mit einer erfindungsgemäßen Werkzeugmaschinenüberwachungsvorrichtung in einer schematischen Darstellung,
- Fig. 2: einen Teilbereich der Werkzeugmaschine mit der Werkzeugmaschinenüberwachungsvorrichtung in einer perspektivischen Ansicht,
- Fig. 3: einen Teilbereich der Werkzeugmaschine mit der Erkennungseinheit in einer schematischen Darstellung und
- Fig. 4: einen Teilbereich einer alternativen Werkzeugmaschine mit einer Werkzeugmaschinenüberwachungsvorrichtung in einer perspektivischen Ansicht.

### Beschreibung der Ausführungsbeispiele

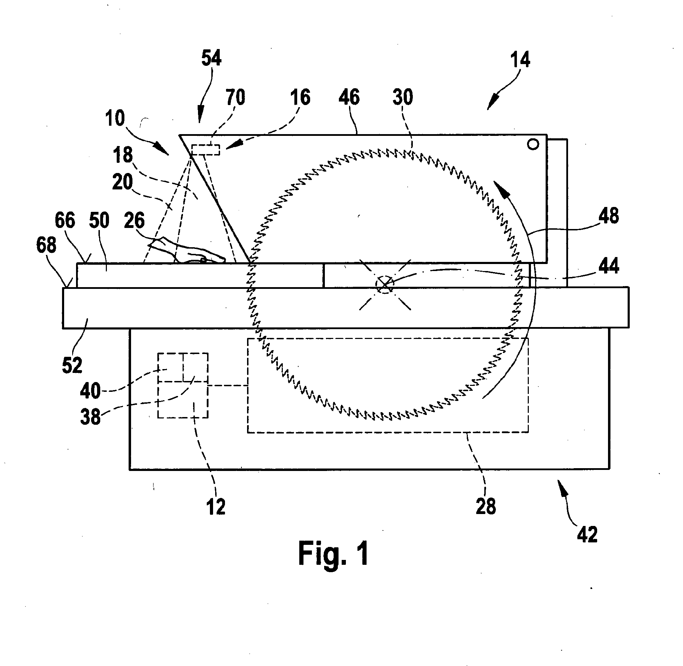

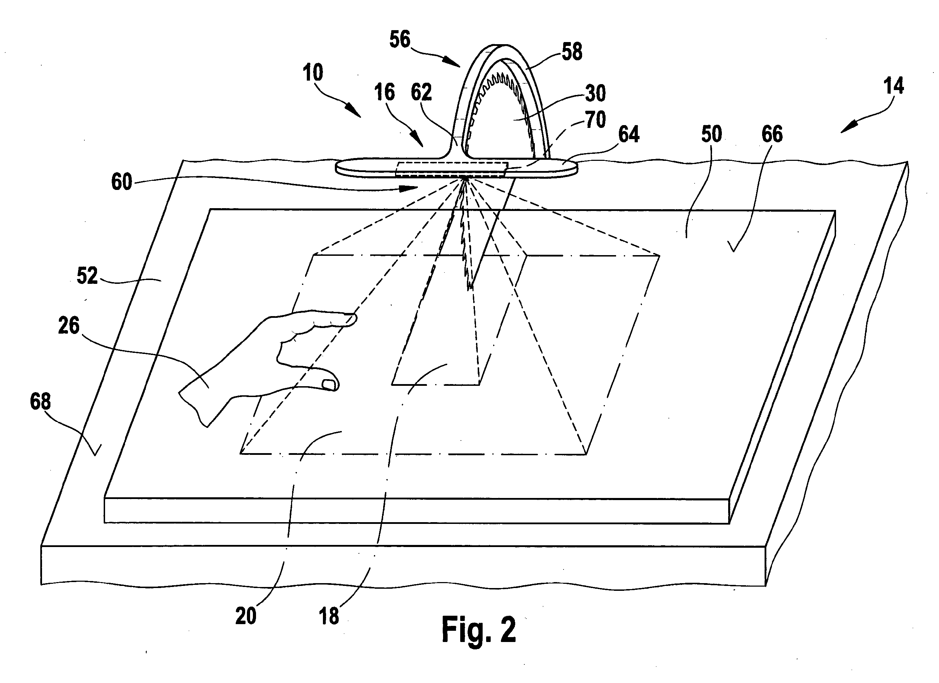

In Figur 1 ist eine von einer Tischkreissäge gebildete Werkzeugmaschine 14 schematisch dargestellt. Die Tischkreissäge umfasst ein von einem Kreissägenblatt gebildetes Werkzeug 30 und einen Sägetisch 42, in dem das Werkzeug 30 um eine Drehachse 44 drehbar fixiert ist. Ein Antrieb des Werkzeugs 30 erfolgt mittels einer Werkzeugmaschinenantriebseinheit 28 der Werkzeugmaschine 14. Zudem umfasst die Werkzeugmaschine 14 eine Schutzhaube 46, die in eine Umfangsrichtung 48 des Werkzeugs 30 das Werkzeug 30 in einem Bereich umgibt, der aus der Werkzeugmaschine 14 zwecks einer Bearbeitung von Objekten bzw. Werkstücken 50 ragt. Des Weiteren weist die Werkzeugmaschine 14 eine Werkzeugmaschinenüberwachungsvorrichtung 10 auf mit einer Projektionseinheit 16 und einer Erkennungseinheit 12, die zu einem Schutz eines Bedieners vor Verletzungen im Betrieb der Werkzeugmaschine 14 vorgesehen sind. Die Erkennungseinheit 12 ist zu einer Erkennung einer Anwendungssituation, insbesondere eines Betriebsmodus, der Werkzeugmaschine 14 und zu einer Detektion von menschlichem und/oder tierischem Gewebe 26 und/oder des Werkstücks 50, wie beispielsweise eine Hand des Bedieners, vorgesehen und ist hierfür unterhalb einer Sägetischplatte 52 angeordnet. Hierzu weist die Erkennungseinheit 12 eine Recheneinheit 38 und eine Datenbank 40 auf. Die Projektionseinheit 16 ist zu einer Projektion von Überwachungsbereichen 18, 20 auf dem zu bearbeitenden Werkstück 50 im Betrieb der Werkzeugmaschine 14 vorgesehen. Hierzu ist die Projektionseinheit 16 in einem Frontbereich 54 mittels einer von der Schutzhaube 46 separat ausgebildeten Haltevorrichtung 56 (Figur 2) angeordnet, die von der Schutzhaube 46 überdeckt ist. Hierdurch ist eine Schutzfunktion der Projektionseinheit 16 auch bei einer demontierten Schutzhaube 46 gewährleistet. Grundsätzlich ist es jedoch auch denkbar, dass die Projektionseinheit 16 auch direkt in der Schutzhaube 46 integriert bzw. angeordnet ist. Die Projektionseinheit 16 ist dabei von einer optischen Projektionseinheit 16 gebildet.

Figur 2 zeigt einen Teilbereich der von der Tischkreissäge gebildeten Werkzeugmaschine 14 mit dem Werkzeug 30. Die Haltevorrichtung 56 weist einen Haltearm 58 auf, an dem an einer einem Frontbereich 60 des Werkzeugs 30 zugewandten Seite 62 ein Halteelement 64 angeordnet ist. Der Frontbereich 60 des Werkzeugs 30 ist als der Bereich des Werkzeugs 30 definiert, der bei einem Arbeitsprozess in einem Kontakt mit dem zu bearbeitenden Werkstück 50 ist. Das Halteelement 64 ist zu einer Anordnung der optischen Projektionseinheit 16 vorgesehen. Mittels der Projektionseinheit 16 werden zwei Überwachungsbereiche 18, 20 definiert, wobei die beiden Überwachungsbereiche 18, 20 auf eine Werkstückoberfläche 66 bzw. auf eine Sägetischoberfläche 68 projiziert werden. Die beiden Überwachungsbereiche 18, 20 der Projektionseinheit 16 sind dazu vorgesehen, eine Gefahrenzone bzw. zwei unterschiedliche Gefahrenzonen optisch sichtbar für einen Bediener im Betrieb der Werkzeugmaschine 14 zu markieren. Die erste Gefahrenzone bzw. der erste Überwachungsbereich 18 ist dabei direkt um das Werkzeug 30 bzw. im Kontaktbereich des Werkzeugs 30 mit dem Werkstück 50 angeordnet, die zweite Gefahrenzone bzw. der zweite Überwachungsbereich 20 ist in größerem Abstand als der erste Überwachungsbereich 18 zum Werkzeug 30 um das Werkzeug 30 und den ersten Überwachungsbereich 18 angeordnet.

Zu einer optischen Unterscheidung der beiden Überwachungsbereiche 18, 20 werden diese von der Projektionseinheit 16 mit unterschiedlichem, farbigem Licht ausgestrahlt. Hierzu weist die Projektionseinheit 16 eine Lasereinheit 70 auf, die Laserlicht einer bestimmten Farbe auf jeden der beiden Überwachungsbereiche 18, 20 projiziert, wobei sich die Laserlichtfarbe des ersten Überwachungsbereichs 18 von der Laserlichtfarbe des zweiten Überwachungsbereichs 20 unterscheidet, so dass für den Bediener eine optische Unterscheidbarkeit der beiden Überwachungsbereiche 18, 20 gegeben ist. Die Farben des Laserlichts können zudem von dem Bediener der Werkzeugmaschine 14 über eine nicht näher dargestellte Eingabeeinheit abhängig von einer Farbe der Werkstückoberfläche 66 geändert werden. Ferner ist die Projektionseinheit 16 bzw. die Lasereinheit 70 dazu vorgesehen, ein optisches und/oder visuelles Erscheinungsbild des zweiten Überwachungsbereichs 20 zu ändern, sobald menschliches, insbesondere eine Hand des Bedieners, oder tierisches Gewebe 26 und/oder das Werkstück 50 in diesen Überwachungsbereich 20 gelangt. Die Änderung des optischen und/oder visuellen Erscheinungsbilds erfolgt durch eine Änderung der Laserlichtfarbe und/oder einer Änderung einer Laserlichtintensität, wie beispielsweise ein Blinken des Laserlichts, und/oder zusätzliche Lichtsignale. Alternativ oder zusätzlich zu den aufgezeigten Änderungen des visuellen Erscheinungsbildes sind weitere optische und/oder akustische Warnsignale durch die Projektionseinheit 16 jederzeit denkbar.

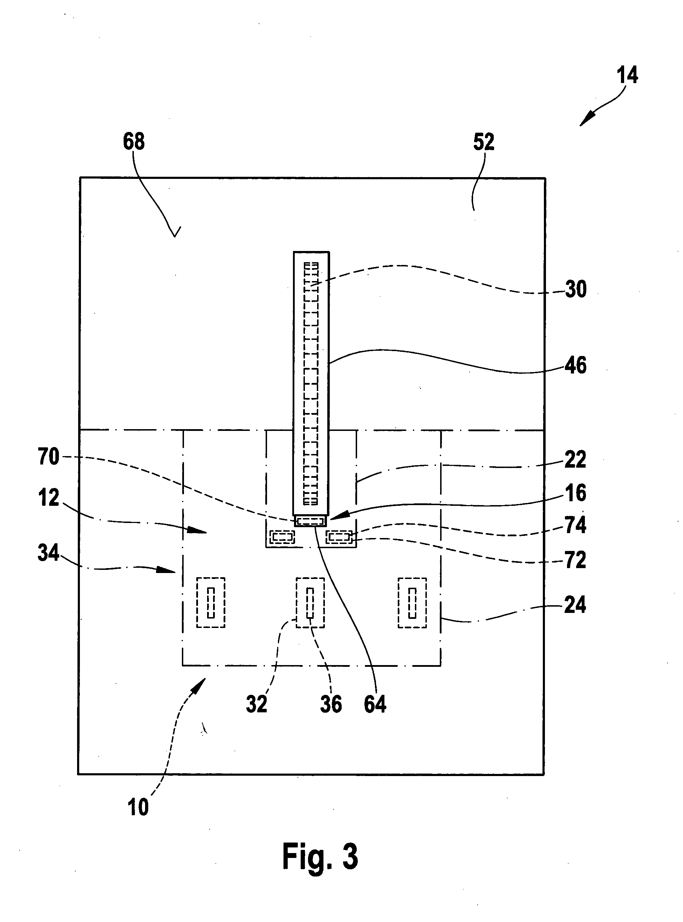

Eine Detektion von menschlichem oder tierischem Gewebe 26 erfolgt mittels der Erkennungseinheit 12 (Figur3). Die Erkennungseinheit 12 weist hierzu zwei Überwachungsbereiche 22, 24 auf, die im Wesentlichen mit den beiden Überwachungsbereichen 18, 20 der Projektionseinheit 16 übereinstimmen, so dass die Überwachungsbereiche 22, 24 der Erkennungseinheit 12 durch die Überwachungsbereiche 18, 20 der Projektionseinheit 16 für einen Bediener der Werkzeugmaschine 14 optisch markiert sind. Ferner sind die beiden Überwachungsbereiche 22, 24 zu einem Überwachen eines Anwendungsprozesses, wie beispielsweise einem Sägen, der Werkzeugmaschine 14 vorgesehen. Die Erkennungseinheit 12 weist ein phasenvariables Antennenarray 34 auf mit mehreren UWB-Radarsensoren 32, 72, die auf die beiden Überwachungsbereiche 18, 20 verteilt angeordnet sind. Die UWB-Radarsensoren 32, 72 umfassen jeweils eine UWB-Radarantenne 36, 74, die zur Abstrahlung bzw. zum Empfangen eines Ultrabreitband-Radarsignals vorgesehen sind. Mittels des phasenvariablen Antennenarrays 34 bzw. der 'UWB-Radarsensoren 32, 72 ist die Erkennungseinheit 12 zu einer Positionsbestimmung des menschlichen oder tierischen Gewebes 26 im Betrieb der Werkzeugmaschine 14 vorgesehen. Alternativ oder zusätzlich ist in einer weiteren Ausgestaltung der Erfindung mittels der Erkennungseinheit 12 zudem auch eine Geschwindigkeitsbestimmung von sich bewegendem menschlichen oder tierischen Gewebe 26 und/oder des Werkstücks 50, wie beispielsweise eine Bewegung der Hand des Bedieners, denkbar.

Den beiden mit UWB-Radarsensoren 32, 72 versehenen Überwachungsbereichen 22, 24 der Erkennungseinheit 12 ist jeweils ein unterschiedlicher Betriebsmodus der Werkzeugmaschine 14 zugeordnet, sobald sich eine Hand des Bedieners in einem der Überwachungsbereiche 22, 24 der Erkennungseinheit 12 befindet. Dem zweiten Überwachungsbereich 24 ist dabei ein Warnmodus der Werkzeugmaschine 14 zugeordnet. Neben einer Ausgabe eines optischen Warnsignals im zweiten Überwachungsbereich 20 der Projektionseinheit 16 mittels der Projektionseinheit 16 bzw. der Lasereinheit 70 im Warnmodus der Werkzeugmaschine 14 ist die Erkennungseinheit 12 zusammen mit der Werkzeugmaschinenantriebseinheit 28 zu einer Reduzierung einer Drehzahl des Werkzeugs 30 vorgesehen. Befindet sich die Hand des Bedieners im ersten Überwachungsbereich 22 und somit die Hand des Bedieners in unmittelbarer Nähe zum Kreissägenblatt, wird die Werkzeugmaschine 14 bzw. ein Betrieb des Kreissägenblattes automatisch von der Erkennungseinheit 12 abgeschaltet. Dabei wird mittels des Antennenarrays 34 bzw. der UWB-Radarsensoren 32, 72 im Zusammenspiel mit der Recheneinheit 38, über die eine Auswertung von sensierten Daten bzw. Kenngrößen der UWB-Radarsensoren 32, 72 erfolgt, die sich in einem der Überwachungsbereiche 22, 24 aufhaltende Hand in dem entsprechenden Überwachungsbereich 22, 24 ermittelt. Eine Auswertung der Recheneinheit 38 erfolgt hierbei mittels einer unscharfen bzw. einer neuronalen Logik. Sobald die Hand innerhalb einem der Überwachungsbereiche 22, 24 detektiert wird, wählt die Recheneinheit 38 eine entsprechende Kenngrößen für den der detektierten Anwendungssituation zugeordneten Warnmodus aus und sendet diese über eine nicht näher dargestellte Datenleitung an die Werkzeugmaschinenantriebseinheit 28 und/oder an die Projektionseinheit 16. Die Kenngrößen sind hierzu in der Datenbank 40 gespeichert, wobei die Recheneinheit 38 die Kenngröße aus einem Satz Kenngrößen, denen jeweils eine Anwendungssituation zugeordnet ist, auswählt. Mittels der von der Recheneinheit 38 ausgewählten Kenngrößen wird die Projektionseinheit 16 zu einer Ausgabe von Warnsignalen in dem zweiten Überwachungsbereich 20 der Projektionseinheit 16 veranlasst bzw. die Drehzahl des Kreissägenblatts bzw. eine Abschaltung eines Antriebs des Kreissägenblatts zusammen mit der Werkzeugmaschinenantriebseinheit 28 eingestellt.

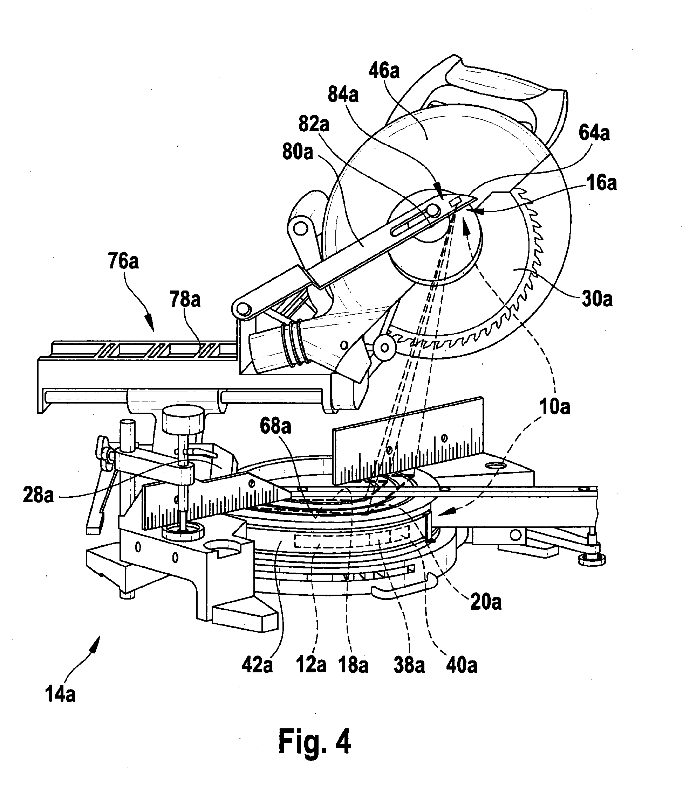

In Figur 4 ist ein zu den Figuren 1 bis 3 alternatives Ausführungsbeispiel einer Werkzeugmaschine 14 dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen des Ausführungsbeispiels in Figur 4 der Buchstabe a hinzugefügt. Die nachfolgende Beschreibung beschränkt sich im Wesentlichen auf die Unterschiede zu dem Ausführungsbeispiel in den Figuren 1 bis 3, wobei bezüglich gleich bleibender Bauteile, Merkmale und Funktionen auf die Beschreibung des Ausführungsbeispiels in den Figuren 1 bis 3 verwiesen werden kann.

Die Werkzeugmaschine 14a ist von einer Paneelsägemaschine gebildet. Die Paneelsägemaschine weist ein Werkzeug 30a mit einer Schutzhaube 46a, die in Bezug auf einen Sägetisch 42a um eine Kippachse kippbar angeordnet sind, und einer Werkzeugmaschinenüberwachungsvorrichtung 10a auf. Hierzu weist eine Werkzeughaltevorrichtung 76a der Werkzeugmaschine 14a eine Halteschiene 78a auf, an der das Werkzeug 30a zusammen mit der Schutzhaube 46a kippbar angeordnet ist und zwei Haltearme 80a, die zu einer Positionssicherung des Werkzeugs 30a und der Schutzhaube 46a vorgesehen und beidseitig des Werkzeugs 30a angeordnet sind. Die Haltearme 80a sind jeweils an der Halteschiene 78a und im Bereich einer Drehachse 82a des Werkzeugs 30a an der Schutzhaube 46a angeordnet. Zudem weisen die Haltearme 80a an einem der Halteschiene 78a abgewandten Endbereich 84a jeweils ein Halteelement 64a auf zur Anordnung der Projektionseinheit 16a. Eine Projektion bzw. Markierung von Überwachungsbereichen 18a, 20a der Projektionseinheit 16a bzw. eine Detektion von menschlichem Gewebe innerhalb von Überwachungsbereichen 22a, 24a einer Erkennungseinheit 12a der Werkzeugmaschinenüberwachungsvorrichtung 10a erfolgt analog zu der Beschreibung in den Figuren 1 bis 3.

## Patentansprüche

1. Werkzeugmaschinenüberwachungsvorrichtung mit einer Erkennungseinheit (12; 12a) zur Erkennung einer Anwendungssituation bei einer Werkzeugmaschine (14; 14a), wobei die Erkennungseinheit (12, 12a) zur Detektion und Positions- und/oder Geschwindigkeitsbestimmung von menschlichem und/oder tierischem Gewebe vorgesehen ist und zumindest zwei Überwachungsbereiche (22, 24; 22a, 24a) zum Überwachen eines Anwendungsprozesses der Werkzeugmaschine (14, 14a) festlegt, mit mindestens einer optischen Projektionseinheit (16; 16a) zur Definition zumindest zweier Überwachungsbereiche (18, 20; 18a, 20a) zum Überwachen eines Anwendungsprozesses der Werkzeugmaschine (14, 14a), wobei die Überwachungsbereiche (18, 20; 18a, 20a) der Projektionseinheit (16; 16a) die Überwachungsbereiche (22, 24; 22a, 24a) der Erkennungseinheit (12; 12a) optisch markieren, **dadurch gekennzeichnet, dass** die Erkennungseinheit (12,12a) zumindest einen Ultrabreit band-Radarsensor (32, 72; 32a, 72a) aufweist, und dass mindestens ein Überwachungsbereich (18, 20; 18a, 20a) der Projektionseinheit (16; 16a) ein optisches und/oder visuelles Erscheinungsbild aufweist, das sich ändert, wenn menschliches oder tierisches Gewebe (26; 26a) in den Überwachungsbereich (18, 20; 18a, 20a) gelangt.

2. Werkzeugmaschinenüberwachungsvorrichtung nach einem der vorhergehenden Ansprüche, **dadurch gekennzeichnet, dass** die Erkennungseinheit (12, 12a) zur Detektion eines Werkstücks (50) vorgesehen ist.

3. Werkzeugmaschinenüberwachungsvorrichtung nach Anspruch 2, **dadurch gekennzeichnet, dass** mindestens ein Überwachungsbereich (18, 20; 18a, 20a) der Projektionseinheit (16; 16a) ein optisches und/oder visuelles Erscheinungsbild aufweist, das sich ändert, wenn ein werkstück (50) oder menschliches oder tierisches Gewebe (26; 26a) und ein Werkstück (50) in den Überwachungsbereich (18, 20; 18a, 20a) gelangt.

4. Werkzeugmaschinenüberwachungsvorrichtung nach Anspruch 1, **dadurch gekennzeichnet, dass** den Überwachungsbereichen (22, 24; 22a, 24a) bei einem Erkennen eines menschlichen und/oder tierischen Gewebes (26; 26a) jeweils ein unterschiedlicher Betriebsmodus der Werkzeugmaschine (14; 14a) zugeordnet ist.

5. Werkzeugmaschinenüberwachungsvorrichtung nach Anspruch 4, **dadurch gekennzeichnet, dass** zumindest einem der Überwachungsbereiche (22, 24; 22a, 24a) ein Warnmodus der Werkzeugmaschine (14; 14a) zugeordnet ist.

6. Werkzeugmaschinenüberwachungsvorrichtung nach Anspruch 5, **dadurch gekennzeichnet, dass** die Erkennungseinheit (12; 12a) im Zusammenwirken mit einer Werkzeugmaschinenantriebseinheit (28; 28a), die zum Antreiben eines Werkzeugs (30; 30a) vorgesehen ist, zum Verlangsamen eines Werkzeugantriebs im Warnmodus vorgesehen ist.

7. Werkzeugmaschinenüberwachungsvorrichtung nach Anspruch 4, **dadurch gekennzeichnet, dass** zumindest einem der Überwachungsbereiche (24; 24a) eine Sicherheitsabschaltung der Werkzeugmaschine (14; 14a) zugeordnet ist.

8. Werkzeugmaschinenüberwachungsvorrichtung nach Anspruch 2, **dadurch gekennzeichnet, dass** die Erkennungseinheit (12; 12a) zu einer Positions- und/oder Geschwindigkeitsbestimmung von menschlichem oder tierischem Gewebe (26; 26a) und eines Werkstücks (50) vorgesehen ist.

9. Werkzeugmaschinenüberwachungsvorrichtung nach einem der vorhergehenden Ansprüche, **gekennzeichnet durch** ein Antennenarray (34; 34a).

10. Werkzeugmaschinenüberwachungsvorrichtung nach Anspruch 9, **dadurch gekennzeichnet, dass** die Erkennungseinheit (12; 12a) das Antennenarray (34; 34a) aufweist.

11. Werkzeugmaschinenüberwachungsvorrichtung nach Anspruch 9 oder 10, **dadurch gekennzeichnet, dass** das Antennenarray (34; 34a) von einem phasenvariablen Antennenarray (34; 34a) gebildet ist.

12. Werkzeugmaschinenüberwachungsvorrichtung nach Anspruch 9 oder 10, **dadurch gekennzeichnet, dass** das Antennenarray (34; 34a) zumindest eine UWB-Radarantenne (36, 36a; 74, 74a) aufweist.

13. Werkzeugmaschinenüberwachungsvorrichtung nach einem der vorhergehenden Ansprüche, **dadurch gekennzeichnet, dass** die Erkennungseinheit (12; 12a) eine Recheneinheit (38; 38a) umfasst, die dazu vorgesehen ist, eine Anwendungssituation durch eine auf einer unscharfen und/oder neuronalen Logik basierende Auswertung von Kenngrößen zu erkennen.

14. Werkzeugmaschinenüberwachungsvorrichtung nach einem der vorhergehenden Ansprüche, **dadurch gekennzeichnet, dass** die Erkennungseinheit (12; 12a) eine Datenbank (40; 40a) aufweist, in welcher einem Satz von Kenngrößen eine Anwendungssituation zugeordnet ist.

15. Werkzeugmaschine mit einer Werkzeugmaschinenüberwachungsvorrichtung (10; 10a) nach einem der vorhergehenden Ansprüche.

## Claims

1. Machine tool monitoring apparatus having an identification unit (12; 12a) for identifying a usage situation in a machine tool (14; 14a), wherein the identification unit (12, 12a) is provided for the detection and position and/or speed determination of human and/or animal tissue and defines at least two monitoring regions (22, 24; 22a, 24a) for monitoring a usage process of the machine tool (14, 14a), having at least one optical projection unit (16; 16a) for defining at least two monitoring regions (18, 20; 18a, 20a) for monitoring a usage process of the machine tool (14, 14a), wherein the monitoring regions (18, 20; 18a, 20a) of the projection unit (16; 16a) optically mark the monitoring regions (22, 24; 22a, 24a) of the identification unit (12, 12a), **characterized in that** the identification unit (12, 12a) has at least one ultra-wideband radar sensor (32, 72; 32a, 72a), and **in that** at least one monitoring region (18, 20; 18a, 20a) of the projection unit (16; 16a) has an optical and/or visual appearance which changes when human or animal tissue (26; 26a) passes into the monitoring region (18, 20; 18a, 20a).

2. Machine tool monitoring apparatus according to one of the preceding claims, **characterized in that** the identification unit (12, 12a) is provided for detecting a workpiece (50).

3. Machine tool monitoring apparatus according to Claim 2, **characterized in that** at least one monitoring region (18, 20; 18a, 20a) of the projection unit (16; 16a) has an optical and/or visual appearance, which changes if a workpiece (50) or human or animal tissue (26; 26a) and a workpiece (50) passes into the monitoring region (18, 20; 18a, 20a).

4. Machine tool monitoring apparatus according to Claim 1, **characterized in that** the monitoring regions (22, 24; 22a, 24a) are associated in each case with a different operating mode of the machine tool (14; 14a) in case human and/or animal tissue (26; 26a) is identified.

5. Machine tool monitoring apparatus according to Claim 4, **characterized in that** at least one of the monitoring regions (22, 24; 22a, 24a) is associated with a warning mode of the machine tool (14; 14a).

6. Machine tool monitoring apparatus according to Claim 5, **characterized in that** the identification unit (12; 12a) in cooperation with a machine tool drive unit (28; 28a), which is provided for driving a tool (30; 30a), is provided to slow a tool drive in the warning mode.

7. Machine tool monitoring apparatus according to Claim 4, **characterized in that** at least one of the monitoring regions (24; 24a) is associated with a safety shut-down of the machine tool (14; 14a).

8. Machine tool monitoring apparatus according to Claim 2, **characterized in that** the identification unit (12; 12a) is provided for position and/or speed determination of human or animal tissue (26; 26a) and of a workpiece (50).

9. Machine tool monitoring apparatus according to one of the preceding claims, **characterized by** an antenna array (34; 34a).

10. Machine tool monitoring apparatus according to Claim 9, **characterized in that** the identification unit (12; 12a) has the antenna array (34; 34a).

11. Machine tool monitoring apparatus according to Claim 9 or 10, **characterized in that** the antenna array (34; 34a) is formed by a phase-variable antenna array (34; 34a).

12. Machine tool monitoring apparatus according to Claim 9 or 10, **characterized in that** the antenna array (34; 34a) has at least one UWB radar antenna (36, 36a; 74, 74a).

13. Machine tool monitoring apparatus according to one of the preceding claims, **characterized in that** the identification unit (12; 12a) comprises a computation unit (38; 38a), which is provided for identifying a usage situation by way of an evaluation of characteristic variables based on fuzzy and/or neural logic.

14. Machine tool monitoring apparatus according to one of the preceding claims, **characterized in that** the identification unit (12; 12a) has a database (40; 40a), in which a set of characteristic variables is associated with a usage situation.

15. Machine tool having a machine tool monitoring apparatus (10; 10a) according to one of the preceding claims.

## Revendications

1. Dispositif de surveillance d'une machine-outil présentant
une unité de détection (12; 12a) qui détecte une situation d'utilisation d'une machine-outil (14; 14a),
l'unité de détection (12, 12a) étant prévue pour détecter et déterminer la position et/ou la vitesse de tissus humains et/ou de tissus animaux et définissant au moins deux zones de surveillance (22, 24; 22a, 24a) destinées à surveiller une opération d'utilisation de la machine-outil (14, 14a),
au moins une unité optique de projection (16; 16a) qui définit au moins deux zones de surveillance (18, 20; 18a, 20a) destinées à surveiller une opération d'utilisation de la machine-outil (14, 14a), les zones de surveillance (18, 20; 18a, 20a) de l'unité de projection (16; 16a) repérant optiquement les zones de surveillance (22, 24; 22a, 24a) de l'unité de détection (12; 12a)
**caractérisé en ce que**
l'unité de détection (12, 12a) présente au moins un détecteur radar (32, 72; 32a, 72a) à bande ultralarge et
**en ce qu'**au moins une zone de surveillance (18, 20; 18a, 20a) de l'unité de projection (16; 16a) présente un aspect optique et/ou visuel qui varie lorsque du tissu humain ou du tissu animal (26; 26a) sont présents dans la zone de surveillance (18, 20; 18a, 20a).

2. Dispositif de surveillance de machine-outil selon la revendication précédente, **caractérisé en ce que** l'unité de détection (12, 12a) est prévue pour détecter une pièce (50).

3. Dispositif de surveillance de machine-outil selon la revendication 2, **caractérisé en ce qu'**au moins une zone de surveillance (18, 20; 18a, 20a) de l'unité de projection (16; 16a) présente un aspect optique et/ou visuel qui varie lorsqu'une pièce (50) ou du tissu humain ou du tissu animal (26; 26a) et une pièce (50) sont présents dans la zone de surveillance (18, 20; 18a, 20a).

4. Dispositif de surveillance de machine-outil selon la revendication 1, **caractérisé en ce qu'**un mode de fonctionnement différent de la machine-outil (14; 14a) est associé à chacune des zones de surveillance (22, 24; 22a, 24a) lors de la détection d'un tissu humain et/ou d'un tissu animal (26; 26a).

5. Dispositif de surveillance de machine-outil selon la revendication 4, **caractérisé en ce qu'**un mode d'avertissement de la machine-outil (14; 14a) est associé à au moins une des zones de surveillance (22, 24; 22a, 24a).

6. Dispositif de surveillance de machine-outil selon la revendication 5, **caractérisé en ce que** l'unité de détection (12; 12a) est prévue pour ralentir l'entraînement de l'outil en mode d'avertissement, en coopération avec une unité (28, 28a) d'entraînement de la machine-outil prévue pour entraîner un outil (30; 30a).

7. Dispositif de surveillance de machine-outil selon la revendication 4, **caractérisé en ce qu'**un débranchement de sécurité de la machine-outil (14; 14a) est associé à au moins l'une des zones de surveillance (24; 24a).

8. Dispositif de surveillance de machine-outil selon la revendication 2, **caractérisé en ce que** l'unité de détection (12; 12a) est prévue pour déterminer la position et/ou la vitesse de tissus humains ou de tissus animaux (26; 26a) et d'une pièce (50).

9. Dispositif de surveillance de machine-outil selon l'une des revendications précédentes, **caractérisé par** une batterie (34; 34a) d'antennes.

10. Dispositif de surveillance de machine-outil selon la revendication 9, **caractérisé en ce que** l'unité de détection (12; 12a) présente la batterie (34; 34a) d'antennes.

11. Dispositif de surveillance de machine-outil selon les revendications 9 ou 10, **caractérisé en ce que** la batterie (34; 34a) d'antennes est formée d'une batterie (34; 34a) d'antennes à phase variable.

12. Dispositif de surveillance de machine-outil selon les revendications 9 ou 10, **caractérisé en ce que** la batterie (34; 34a) d'antennes présente au moins une antenne radar UWB (36, 36a; 74, 74a).

13. Dispositif de surveillance de machine-outil selon l'une des revendications précédentes, **caractérisé en ce que** l'unité de détection (12; 12a) comporte une unité de calcul (38; 38a) prévue pour détecter une situation d'utilisation par une évaluation de grandeurs caractéristiques basées sur une logique floue et/ou une logique neuronale.

14. Dispositif de surveillance de machine-outil selon l'une des revendications précédentes, **caractérisé en ce que** l'unité de détection (12; 12a) présente une base de données (40; 40a) dans laquelle une situation d'utilisation est associée à un jeu de grandeurs caractéristiques.

15. Machine-outil dotée d'un dispositif (10; 10a) de surveillance de machine-outil selon l'une des revendications précédentes.
